# EUROPÄISCHE PATENTSCHRIFT

(11) **EP 3 781 820 B1**
(45) Veröffentlichungstag und Bekanntmachung des Hinweises auf die Patenterteilung: **23.10.2024**
(21) Anmeldenummer: 19720061.1
(22) Anmeldetag: 11.04.2019
(51) Int. Cl.: F15D 1/00, B08B 17/06, B63B 1/36, B63B 1/38, B63B 59/04

(54) **STRUKTURIERTE GASHALTENDE OBERFLÄCHEN**
STRUCTURED GAS-CONTAINING SURFACES
SURFACES STRUCTURÉES CONTENANT DU GAZ

(30) Priorität: 17.04.2018 DE 102018003141
(43) Veröffentlichungstag der Anmeldung: 24.02.2021
(73) Patentinhaber: Baden-Württemberg Stiftung gGmbH, 70174 Stuttgart (DE)
(72) Erfinder: SCHIMMEL, Thomas, 76131 Karlsruhe (DE)
(74) Vertreter: Müller-Boré & Partner Patentanwälte PartG mbB
(86) Internationale Anmeldenummer: PCT/EP2019/059294
(87) Internationale Veröffentlichungsnummer: WO 2019/201744

(56) Entgegenhaltungen:
- WO-A1-03/037702
- WO-A2-2013/131618
- DE-A1- 102011 121 796

## Beschreibung

Die vorliegende Erfindung betrifft strukturierte, gashaltende Oberflächen zur Verbesserung der reibungsreduzierenden Eigenschaften von unter einer Flüssigkeit gehaltenen Gasschichten und zur gleichzeitigen Unterdrückung von Turbulenzen. Ferner betrifft die vorliegende Erfindung eine Vorrichtung umfassend diese strukturierte, gashaltende Oberfläche sowie die Verwendung dieser strukturierten, gashaltenden Oberfläche.

Zirka 90% des weltweiten internationalen Handels werden durch Schiffe abgedeckt. Allerdings verursachen Schiffe gravierende Umweltschäden. Laut einer aktuellen Studie werden Schiffsabgase, die in die Atmosphäre gelangen, für bis zu 60.000 Todesfälle pro Jahr verantwortlich gemacht. Die 15 größten Schiffe produzieren angeblich mehr Schwefeldioxid (SO₂) als alle Autos der Welt zusammen. Darüber hinaus scheiden Schiffe große Mengen hochgiftiger Substanzen in das Wasser aus, um das Biofouling ihrer unter Wasser befindlichen Oberflächen des Schiffsrumpfs zu vermeiden. Außerdem werden aufgrund der Reibung des Schiffsrumpfs gegen das Wasser große Mengen an Energie verschwendet.

Drei Hauptprobleme, mit denen Schiffe konfrontiert sind, hängen mit der Tatsache zusammen, dass der Schiffsrumpf in Kontakt mit Wasser steht. Dabei bestehen die folgenden Probleme, nämlich der Strömungswiderstand (auch "Drag" genannt), Korrosion und Fouling, d.h. biologischer Bewuchs auf der Oberfläche.

Drag - der größte Teil des Treibstoffverbrauchs von Schiffen ist auf die Reibung mit dem umgebenden Wasser zurückzuführen.

Korrosion - ein Phänomen, das auch weitgehend damit zusammenhängt, dass das Schiff in direktem Kontakt mit dem umgebenden Meerwasser mit seinem hohen Salzgehalt steht.

Fouling - das Wachstum von Meeresorganismen würde nicht passieren, wenn das Schiff von Luft statt Wasser umgeben wäre.

Im Stand der Technik gibt es verschiedene Ansätze die Reibung von Schiffen zu reduzieren. Beispielsweise kann durch eine Luftschicht zwischen Wasser und dem Schiffsrumpf eine Reibungsreduktion erzielt werden. In WO 2013/131618 A2 wird beispielweise eine solche gashaltende Oberflächenabdeckung mit einer bestimmten Oberflächenstruktur beschrieben, mit welcher u.a. ein Schiffsrumpf über diese gashaltende Schicht vom umgebenden Wasser zumindest partiell getrennt werden kann. Dieser auf einer bionischen Beschichtung basierende Ansatz, welche eine permanente Luftschicht auf einer Oberfläche unter Wasser hält, könnte die vorgenannten Probleme lösen, denn das Bedecken eines Schiffsrumpfs mit einer Luftschicht unter Wasser würde den direkten Kontakt des Schiffes mit dem Wasser vermeiden. Einerseits würde Korrosion vermieden werden, da das salzhaltige Meerwasser nicht mit dem Schiff in Kontakt tritt. Auch das Fouling könnte hiermit vermieden werden, da die Meerespflanzen, Tiere, Algen und Larven aufgrund der Luftschicht nicht auf die Oberfläche des Schiffsrumpfs gelangen. Schließlich würde die Luftschicht als "Schmierschicht" für das Schiff dienen, da die Luftschicht eine sehr viel niedrigere Viskosität als Wasser hat. Dadurch kann die Reibung mit dem umgebenden Wasser reduziert werden.

Neueste Entwicklungen auf dem Gebiet der bionischen Oberflächen zeigen, dass es möglich ist, den direkten Kontakt zwischen einer Oberfläche und dem umgebenden Wasser zu vermeiden. Dies gelingt anhand dieser gashaltenden Oberflächen mittlerweile auch über einen sehr langen Zeitraum von mehreren Jahren, wobei eine Luftschicht unter Wasser gehalten werden kann, um die Oberflächen trocken zu halten, obwohl diese unter Wasser gehalten werden. Dies eröffnet interessante Perspektiven in vielen Anwendungen, wie z.B. für Schiffe, Ölplattformen, Wasserrohrleitungen und verschmutzungsfreie Wasserbehälter.

Das oben genannte Verfahren der Reibungsreduktion, beispielsweise von Schiffen, durch Verwendung strukturierter Oberflächen, die unter Wasser Luft halten, erlaubt in sehr effektiver Weise, die Reibung zwischen dem Wasser und der relativ zum Wasser bewegten Oberfläche zu reduzieren, da die Luftschicht eine erheblich niedrigere Viskosität als das Wasser hat.

Schon vor dem Einsatz von Luftschichten zur Reduzierung der Reibung relativ zum Wasser gab es erfolgreiche Ansätze, die Reibung von Schiffen durch Reduzierung von Turbulenzen zu vermindern. Hierzu wurden insbesondere sehr feine Längsrillen auf der sub-Millimeter-Skala und auf der Mikrometer-Skala verwendet, die parallel zur Strömung, also zur Richtung der relativen Geschwindigkeit zwischen der Oberfläche, beispielsweise einer Schiffsoberfläche, und dem Wasser (oder allgemein der Flüssigkeit) ausgerichtet sind und die damit jegliche Strömungskomponenten quer zur Bewegungsrichtung zumindest in unmittelbarer Nähe zur Oberfläche unterdrücken, wie sie insbesondere durch Turbulenzen (Bildung kleiner Wirbel) zustande kommen. Bei dem so genannten Haifischhauteffekt oder "Shark Skin Effect" ist die Idee, durch bionische, der Oberflächenstruktur der Haifischhaut nachempfundene Strukturen Turbulenzen in der so genannten Grenzschicht in unmittelbarer Nähe zur Oberfläche zu unterdrücken. Durch feine Rippen, so genannte Riblets, die meist eine scharfkantige Rippenspitze haben und deren Höhen und Rippenabständen meist im Bereich von einigen 10 µm liegen, wird die in turbulenter Strömung durch Wirbel bedingte Impulsübertragung quer zur Strömungsrichtung behindert, was nach Literaturangaben zu einer Reibungsreduktion von bis zu 10% in der Theorie und bis zu 8% in der Praxis führt.

Allerdings bewirken solche Maßnahmen, die ebenfalls eine strukturierte Oberfläche voraussetzen,
- keine Veränderung der Viskosität des Mediums (wie es das Einbringen einer Schicht aus niedrig-viskoser Luft bewirkt),
- keine Vermeidung von Fouling durch Vermeidung des Kontaktes zwischen der Oberfläche und dem Wasser (wie es eine Luftschicht zwischen Wasser und Oberfläche bewirkt) und
- keine Vermeidung von Korrosion durch Vermeidung des Kontaktes zwischen der Oberfläche und dem Wasser (wie es ebenfalls eine Luftschicht zwischen Wasser und Oberfläche bewirkt).

Ein erheblicher Nachteil des Einsatzes von Längsrillen ist jedoch, dass das Fouling nicht vermieden werden kann, weshalb der reibungsreduzierende Effekt nur kurzfristig bemerkbar ist.

Auch ein anderer Ansatz wurde und wird technisch verfolgt, nämlich die Erzeugung feiner Luftbläschen im Wasser in unmittelbarer Nähe zur Schiffswand (so genannte "Air Microbubble Technology"). Dieser Ansatz bewirkt tatsächlich eine effektive Viskositätsänderung des Mediums, wenn auch eine weit geringere als der Einsatz einer Luftschicht zwischen Wasser und (Schiffs-)Oberfläche: Das mit kleinen Luftbläschen "verdünnte" Wasser hat eine geringere effektive Viskosität als das reine Wasser ohne die Luftbläschen. Dieses Verfahren hat allerdings den großen Nachteil, dass es spezielle Vorrichtungen benötigt, die unter dem Schiff bzw. in unmittelbarer Nähe zum Schiff feine Luftbläschen erzeugt. Aufgrund der hohen Oberflächenspannung des Wassers benötigt die Erzeugung der Luftbläschen viel Energie. Hinzu kommt, dass mit abnehmendem Radius r der Luftbläschen der Druck im Inneren der Luftbläschen proportional zu 1/r ansteigt, was zusätzlich Energie kostet. Hauptnachteil ist aber, dass die Luftbläschen aufgrund der Auftriebskraft im Wasser nach oben an die Wasseroberfläche steigen und somit aus dem Wasser verschwinden, so dass die Kompressoren ständig neue Luftbläschen erzeugen müssen und die Energieeinsparung nur noch die Differenz aus der Energieeinsparung durch Reibungsreduktion und der zur Erzeugung der Luftbläschen aufgewandten Energie ist. Allerdings bewirken auch diese Maßnahmen, die keine strukturierte Oberfläche, wohl aber eine Vorrichtung zur kontinuierlichen ununterbrochenen Erzeugung der Luftbläschen voraussetzen,
- zwar eine Veränderung der effektiven Viskosität des Mediums (wenn auch viel geringer als es das Einbringen einer Schicht aus niedrig-viskoser Luft bewirkt),
- jedoch keine Vermeidung von Fouling durch Vermeidung des Kontaktes zwischen der Oberfläche und dem Wasser (wie es eine Luftschicht zwischen Wasser und Oberfläche bewirkt) und
- keine Vermeidung von Korrosion durch Vermeidung des Kontaktes zwischen der Oberfläche und dem Wasser (wie es ebenfalls eine Luftschicht zwischen Wasser und Oberfläche bewirkt).

Zusammenfassend kann man zum wesentlichen Unterschied zwischen Air Microbubble Technology und den permanenten Luftschichten unter Wasser sagen:
- Die permanenten Luftschichten unter Wasser bewirken, dass das Wasser das Schiff nicht berührt. Das Schiff bleibt trocken.
- Die Air Microbubble Technology hingegen bewirkt, dass die Luft das Schiff nicht berührt. Das Schiff bleibt nass.

Nachteil der Air Microbubble Technology ist natürlich, dass sie ein ständiges, ununterbrochenes Nachpumpen von Luft durch einen Kompressor erfordert. Umgekehrt macht sie diese Tatsache auch tolerant gegen Luftverlust, der bei dieser Technik systemimmanent ohnehin vorhanden ist. Bei der Beschichtung von Schiffen oder anderen Oberflächen unter Wasser bzw. einer anderen Flüssigkeit müssen im Falle eines Luftverlustes aus der Schicht erst geeignete Maßnahmen zur Regeneration der Luftschicht getroffen werden.

Der vorliegenden Erfindung liegt somit die Aufgabe zugrunde, einen neuen Ansatz zur weiteren Verbesserung der reibungsreduzierenden Eigenschaften von Oberflächen bereitzustellen, die mit einer Flüssigkeit in Kontakt stehen oder in Kontakt gebracht werden sollen.

Diese Aufgabe wird durch die in den Ansprüchen gekennzeichneten Ausführungsformen der vorliegenden Erfindung gelöst.

Insbesondere wird erfindungsgemäß eine im beiliegenden Anspruch 1 definierte strukturierte Oberfläche bereitgestellt, die auf einer flüssigkeitszugewandten Seite zumindest bereichsweise flüssigkeitsabweisende Strukturen aufweist, die eine gashaltende Schicht ausbilden, wobei die flüssigkeitsabweisenden Strukturen Vorsprünge oder vorstehende Elemente sind, wobei die Oberfläche der gashaltenden Schicht zumindest im Bereich der Vorsprünge oder vorstehenden Elemente eine flüssigkeitsabweisende Oberfläche aufweist, die unter Flüssigkeit zumindest zeitweise eine Gasschicht hält oder halten kann, wobei die gashaltende Schicht durch fluidundurchlässige Trennwände in eine Vielzahl von in sich abgeschlossenen Compartments unterteilt ist, dadurch gekennzeichnet, dass die strukturierte Oberfläche zusätzlich parallel zur Strömungsrichtung der Flüssigkeit bzw. parallel zur Bewegungsrichtung der strukturierten Oberfläche relativ zur Flüssigkeit hervorstehende Rippenstrukturen aufweist, die auf den oberen, der Flüssigkeit zugewandten Enden auf den Teilen der Compartment-Wände gebildet sind, die parallel zur Strömungsrichtung ausgerichtet sind, so dass diese Compartment-Wände in Bezug auf die anderen Compartment-Wände, die nicht parallel zur Strömungsrichtung ausgerichtet sind, erhöht sind und zumindest zeitweise um 0,1 µm bis 10 mm aus der Gasschicht herausragen und in die Flüssigkeit hineinragen.

Aufgrund dieser spezifischen Ausgestaltung der erfindungsgemäßen strukturierten Oberfläche kann die Reibung mit der Flüssigkeit aufgrund der gashaltenden Schicht erheblich reduziert werden, da die Viskosität der gehaltenen Gasschicht erheblich geringer ist als die der Flüssigkeit, beispielsweise in Form von Wasser. Da die erfindungsgemäße strukturierte Oberfläche zusätzlich zu dieser Oberflächenstruktur geeignete hervorstehende Rippenstrukturen aufweist, lässt sich zusätzlich eine Unterdrückung oder Reduzierung von Turbulenzen erreichen, was den reibungsreduzierenden Effekt der Oberfläche noch weiter erhöht, ohne den Antifouling-Effekt und die antikorrosive Wirkung der Gasschicht zu verlieren.

Diese Rippenstrukturen, die weitgehend parallel zur Strömungsrichtung ausgerichtet sind (wobei mit Strömungsrichtung die Richtung der relativen Bewegung zwischen der Oberfläche und der umgebenden Flüssigkeit gemeint ist), sind ähnlich wie die oben erwähnten Riblet-Strukturen ausgestaltet und enden bevorzugt mit einer scharfen Kante, d.h. mit einer Kante, deren Krümmungsradius wesentlich kleiner ist als die Breite und als die Höhe der Struktur, idealerweise um mindestens einen Faktor 10 kleiner.

Gemäß der vorliegenden Erfindung handelt es sich bei der Flüssigkeit, welche zumindest bereichsweise in Kontakt mit der strukturierten Oberfläche steht, um jedwede Flüssigkeit. Vorzugsweise ist die Flüssigkeit Wasser, insbesondere Süßwasser oder Meerwasser, oder eine wässrige Lösung. Darüber hinaus kann die Flüssigkeit auch Alkohole, Alkane, Öle, polare und unpolare Lösungsmittel enthalten, ohne auf diese beschränkt zu sein. Wenn nachfolgend auf "Wasser" Bezug genommen wird, schließt dies auch die vorstehend genannten Flüssigkeiten ein.

Das in der gashaltenden Schicht gehaltene Gas kann beispielsweise Luft, Stickstoff, Argon, Helium, Kohlendioxid oder ein anderes Gas sein, wobei Luft, Stickstoff, Argon und Helium bevorzugt sind. Wenn nachfolgend auf "Luft" Bezug genommen wird, schließt dies auch die vorstehend genannten Gase ein.

Erfindungsgemäß sind insbesondere vier vorteilhafte Ausgestaltungen (i) bis (iii) zu erwähnen, die auch miteinander kombiniert werden können:
(i) Die Rippenstrukturen, die Compartment-Wände der einzelnen Compartments, also der Zellen, bilden, wie nachfolgend genauer beschrieben wird, die unter Flüssigkeit das Gas enthalten, sind an ihrem oberen Ende so gestaltet, dass sie zumindest zeitweise und zumindest teilweise in die Flüssigkeit (z.B. Wasser) ragen, und zwar mit dem Teil der Compartment-Wände, der parallel zur Strömung ausgerichtet ist. Bei einer der bevorzugten Compartment-Formen, der langestreckt hexagonalen Form, bei der die einzelnen, voneinander getrennten, gashaltenden Compartments von oben betrachtet jeweils die Form eines asymmetrischen Hexagons haben, bei dem die längeren Seiten parallel zur Strömungsrichtung ausgerichtet sind, lassen sich die Rippenstrukturen sehr einfach integrieren: Die langen Compartment-Seiten werden einfach nach oben erhöht, so dass sie zumindest zeitweise und zumindest teilweise in die Flüssigkeit ragen, und sie werden in einer bevorzugten Ausgestaltung oben mit einer scharfen Kante abgeschlossen.
(ii) Die Rippenstrukturen nach (i) lassen sich nun ganz oder teilweise mit hydrophiler Oberfläche ausgestalten, so dass die nun durch die Existenz der in das Wasser ragenden Rippenstrukturen wesentlich erhöhte Kontaktfläche des Wassers mit hydrophiler Kontaktfläche am Rande der Compartments die lufthaltende Eigenschaft verbessert und den erforderlichen Unterdruck, der benötigt wird, die Luft aus den Compartments zu entreißen, wesentlich erhöht ("Pinning Riblets"). Die Rippenstrukturen erfüllen also, wenn sie eine ganz oder teilweise hydrophile Oberfläche haben, einen doppelten Zweck: Sie dienen zum einen der Unterdrückung von Turbulenzen und sie erhöhen zum anderen die Pinning-Kraft, mit der die Zellwände das Wasser an das obere Ende der Zellwand binden und so ein Entweichen der Luft aus den Zellen verhindern (die im Inneren hydrophob, also wasserabweisend, beschichtet sind und die nur an ihrem oberen Rand und in dem nach außen ins Wasser hinein fortgesetzten Bereich der Rippenstrukturen hydrophil sind).
(iii) Die Rippenstrukturen nach (i) lassen sich aber auch ganz oder teilweise mit hydrophober, also wasserabweisender, Oberfläche ausgestalten und lassen sich damit gleichzeitig als Strukturen zum Einfangen von kleinen Luftblasen aus dem Wasser verwenden. Wenn etwa bei Schiffen die Rippen längs zur Strömungsrichtung ausgebildet sind und die kleinen Luftblasen sich im Wasser bei ihrem durch die Auftriebskraft bedingten Aufstieg im Wasser von unten nach oben bewegen, so bewegen sie sich senkrecht zu den Rippenstrukturen und können so an diesen hängenbleiben und von diesen eingefangen werden. Dies ist bereits bei hydrophilen Rippenstrukturen möglich. Der Effekt des Luftblaseneinfangs wird aber durch die Ausgestaltung in Form von Rippenstrukturen, bei denen zumindest der Bereich der äußeren Kante hydrophob, also wasserabweisend, ist, noch wesentlich verstärkt, da die Verdrängung des Wassers an der Oberfläche der Rippenstruktur durch die Luft nun noch einen zusätzlichen energetischen Vorteil bietet. Die Luftblasen, die dafür erzeugt werden müssen, haben dabei einen Durchmesser, der bevorzugt dem der Höhe oder dem des Abstandes der Rippenstrukturen entspricht. In einer bevorzugten Ausgestaltungsvariante ist dies der Bereich zwischen 0,1 µm und 1 mm, besonders bevorzugt der Bereich zwischen 5 µm und 500 µm sowohl für die Höhe der Rippenstrukturen als auch für den Abstand benachbarter Rippenstrukturen.

Die vorliegende Erfindung wird nachfolgend zusammen mit den Figuren genauer erläutert. Die Figuren zeigen:

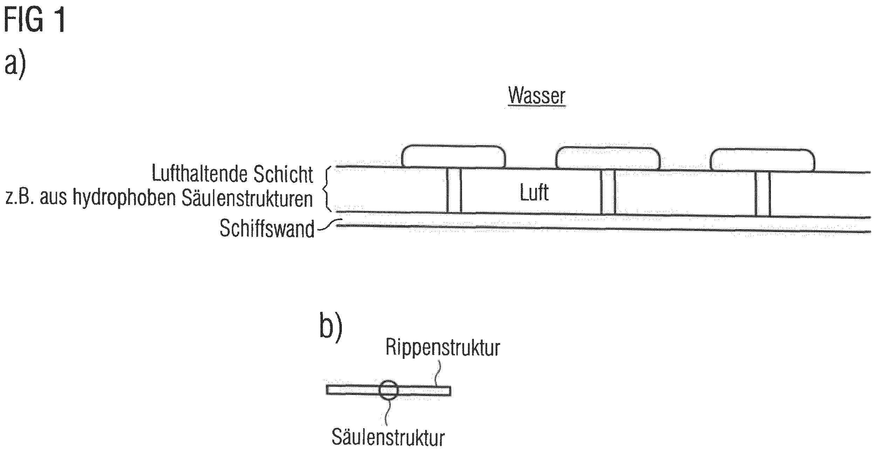

Fig. 1 zeigt nicht erfindungsgemäße Rippenstrukturen auf Säulenstrukturen, wobei Fig. 1(a) eine Seitenansicht darstellt und Fig. 1(b) eine Draufsicht einer einzelnen Struktur darstellt.
Fig. 2 zeigt eine gestreckt hexagonale Compartmentstruktur mit oben an den Längsseiten parallel zur Strömungsrichtung aufgebrachten Rippenstrukturen, die senkrecht nach oben ins Wasser ragend angeordnet sind.
Fig. 3 zeigt das Prinzip der Luftfängerstrukturen bei Luftverlust, wobei Fig. 3(a) eine Darstellung ohne Wasser ist, Fig. 3(b) eine "dicke" (d.h. gefüllte) Luftschicht unter Wasser darstellt, Fig. 3(c) eine im Vergleich zu Fig. 3(b) "dünnere" Luftschicht unter Wasser darstellt und Fig. 3(d) den Zustand einer zu dünnen Luftschicht darstellt, bei welchem sich die Haare sprunghaft aufrichten und jetzt ins Wasser ragen.
Fig. 4(a) bis 4(d) zeigen Beispiele von abgerundeten Innengestaltungen der Compartments.
Fig. 5(a) bis 5(c) zeigen das Prinzip eines Desalinators, Kühlaggregats, Destillationsgeräts und Wärmetauschers.

Die gashaltende Schicht, welche durch die flüssigkeitsabweisenden Strukturen gebildet wird, ist derart ausgebildet, dass bei betriebsgemäßem Gebrauch der erfindungsgemäßen strukturierten Oberfläche ein Gas von der gashaltenden Schicht gehalten wird. Dadurch wird ein Körper, auf welchem die erfindungsgemäße strukturierte Oberfläche aufgebracht ist, zumindest partiell, bevorzugt vollständig, durch das Gas von der Flüssigkeit getrennt. Das Gas, welches durch die gashaltende Schicht gehalten wird, wird durch die gashaltende Schicht derart fixiert, dass es vorteilhafterweise nicht zur Flüssigkeitsoberfläche aufsteigt oder durch eine Flüssigkeitsströmung mitgerissen wird.

Gemäß der vorliegenden Erfindung kann die gashaltende Schicht wie die in WO 2013/131618 A2 beschriebene gashaltende Oberflächenabdeckung ausgestaltet sein, worauf vollumfänglich Bezug genommen wird.

Insbesondere weist die gashaltende Schicht auf der flüssigkeitszugewandten Seite zumindest bereichsweise Vorsprünge oder vorstehende Elemente auf, wobei die Oberfläche der gashaltenden Schicht zumindest im Bereich der Vorsprünge oder vorstehenden Elemente eine die Flüssigkeit abweisende Oberfläche aufweist. Zweckmäßigerweise ist der Abstand zwischen den vorstehenden Elementen derart bemessen, dass sich keine Flüssigkeitstropfen zwischen den vorstehenden Elementen anordnen können. Vorteilhafterweise werden die einzelnen Tropfen der Flüssigkeit von einer Vielzahl von vorstehenden Elementen getragen, so dass sich die Grenzfläche zwischen Flüssigkeit und dem zwischen den vorstehenden Elementen befindlichen Gas im Wesentlichen als Einhüllende der vorstehenden Elemente ausbildet. Insbesondere kann der Abstand zwischen zwei benachbarten vorstehenden Elementen etwa 50 µm bis etwa 500 µm, bevorzugt etwa 100 µm bis etwa 200 µm, betragen.

Erfindungsgemäß ist die gashaltende Schicht durch fluidundurchlässige Trennwände in eine Vielzahl von in sich abgeschlossenen Teilbereichen (auch "Compartments" genannt) unterteilt. Bevorzugt sind die Trennwände bevorzugt zumindest bereichsweise oder vollständig hydrophil ausgebildet oder zumindest bereichsweise oder vollständig mit einer hydrophilen Oberfläche versehen. Unter einem Fluid wird erfindungsgemäß sowohl ein Gas, eine Flüssigkeit sowie ein Gemisch davon verstanden. Folglich verhindert die Trennwand, dass sich eine Flüssigkeitsströmung oder eine Gasströmung zwischen benachbarten Teilbereichen ausbildet. Vorteilhafterweise wird bei einem Druckunterschied zwischen zwei benachbarten Teilbereichen mittels der Trennwände verhindert, dass Gas von einem Teilbereich weg zu dem benachbarten Teilbereich strömt und dadurch der Strömungswiderstand gegenüber einer kontaktierenden Flüssigkeit lokal erhöht wird und im Gegensatz dazu aus dem Teilbereich, in den das Gas strömt, überschüssiges Gas in die Flüssigkeit abgegeben wird.

Bevorzugt können die Trennwände zusammen mit den weiteren Elementen der gashaltenden Schicht einstückig bzw. integral ausgebildet sein. Weiter bevorzugt befindet sich eine Vielzahl von hydrophoben vorstehenden Elementen in einer zweidimensionalen Anordnung in jedem der Teilbereiche der gashaltenden Schicht.

Abgesehen von den Compartments, weisen die Vorsprünge oder vorstehenden Elemente vorzugsweise einen zentralen Oberflächenbereich auf, der hydrophil ist und der von einem hydrophoben Oberflächenbereich der Vorsprünge oder vorstehende Elemente umgeben ist. Vorteilhafterweise wird die Grenzfläche zwischen der Flüssigkeit und dem Gas an den Bereichen, welche hydrophil ausgebildet sind, lokalisiert. Dadurch wird weiter vorteilhafterweise ein Ablösen von Gasblasen durch eine Strömung der Flüssigkeit vermieden. Dieses lokale Festlegen der Gasflüssigkeitsgrenze wird auch als "pinning" bezeichnet, so dass die hydrophilen Oberflächenbereiche auch als "pinning-Zentren" bezeichnet werden können.

Demnach weist die erfindungsgemäße strukturierte Oberfläche vorzugsweise die vorstehend beschriebenen Compartments in Kombination mit den vorstehend beschriebenen pinning-Zentren aufweisen.

Das heißt, die vorstehend genannten Probleme, können gemäß der vorliegenden Erfindung gelöst werden, indem aufbauend auf dem Prinzip der Gashaltung unter Wasser durch geeignete strukturierte Oberflächen die Strukturen, die das Gas halten, dahingehend verändert werden, dass durch Ausformung der gashaltenden strukturierten Oberflächen mit geeigneten Rippenstrukturen nicht nur das Gas als niedrigviskoser, reibungsvermindernder "Lubrikationsfilm" weiterhin die Reibung reduziert, sondern dass die zusätzlich eingebrachten oder durch geeignete Modifikation und Formgebung der Compartment-Wände in Form von Rippenstrukturen zusätzlich noch Turbulenzen in unmittelbarer Oberflächennähe unterdrückt werden.

Ein bestehendes Problem der Aufteilung der lufthaltenden Schicht in einzelne Compartments besteht darin, dass diese zwar auch über Jahre unter Wasser die Luft halten, wenn jedoch durch extreme äußere Einflüsse (starke Turbulenzen, hoher Überdruck etc.) einmal Wasser in die Compartments gelangt, so bleiben, falls man Materialien mit nur mäßig hydrophoben Oberflächen wählt, Reste des Wassers ("Wassernester") in den Ecken der Compartments hängen, selbst wenn man die Schichten anschließend wieder an Luft bringt. Das Problem lässt sich lösen, indem für die Compartment-Innenflächen Materialien mit einem sehr großen Kontaktwinkel zum Wasser, also sehr hydrophobe, idealerweise superhydrophobe Materialien oder zumindest sehr hydrophobe oder idealerweise superhydrophobe Oberflächen für die Innenauskleidung der Compartments verwendet werden. Dies ist möglich, stellt aber meist eine eher kostenintensive Variante dar. Außerdem haben viele technisch interessante Materialien, insbesondere auch technische Silikone, hydrophobe, nicht aber superhydrophobe Oberflächen und eine nachträgliche superhydrophobe Beschichtung ist nicht nur mit Kosten verbunden, sondern muss ihre Langzeitstabilität erst in zeit- und kostenaufwändigen Langzeittests unter Beweis stellen.

In der hier vorgestellten erfindungsgemäßen Ausgestaltung wird dieses Problem dadurch gelöst, dass nicht die Materialien verändert werden, sondern die Form der Strukturen. Wassernester bilden sich, wenn es energetisch für das Wasser vorteilhafter ist, sich in die Ecken eines Compartments zu schmiegen, als ein weitgehend kugelförmiges Tröpfchen zu bilden. Damit wird die Bildung von Wassernestern verhindert, indem die Energie, die beim Kontakt des Wassers mit der Innenoberfläche eines Compartments frei wird, minimiert wird. Grenzflächenenergie ist das Produkt aus der Grenzflächenenergie pro Quadratmikrometer mal der Zahl der Quadrtatmikrometer, in denen das Wasser die Oberfläche berührt. Ersteren Faktor minimiert man durch die Wahl einer superhydrophoben Oberfläche, letzteren durch die Wahl einer Oberfläche mit möglichst geringem Krümmungsradius. Die Wassernester bilden sich genau dort, wo der Krümmungsradius am geringsten ist, also an den scharfkantigen Ecken auf der Unterseite der Compartments, und auch dort nicht: sie werden nur dort beobachtet, wo sich drei solche Kanten in einer Ecke treffen. Aufgabe der erfindungsgemäßen Oberflächenstruktur ist es also, innerhalb der lufthaltenden Compartments scharfe Kanten und Ecken zu vermeiden und den Krümmungsradius zu maximieren, genauer gesagt, den minimalen in den Compartments auftretenden Krümmungsradius so groß wie möglich zu halten. In der praktischen Ausgestaltung bedeutet dies die Verwendung von Krümmungsradien, die bevorzugt 10% der Länge und 10% der Breite des Compartments nicht unterschreiten. Dies betrifft nur das Innere der Compartments und nicht deren oberen Rand, der eine möglichst hohe Anziehungskraft an das Wasser ausüben soll (Pinning) und für den scharfe Kanten ausdrücklich erwünscht sind. Und dies betrifft ausdrücklich auch nicht die Rippen- oder Ribietstrukturen, bei denen ebenfalls eine scharfe Kante am oberen Ende ausdrücklich erwünscht ist, sondern es betrifft ausschließlich das lufthaltende Innere der Com partments.

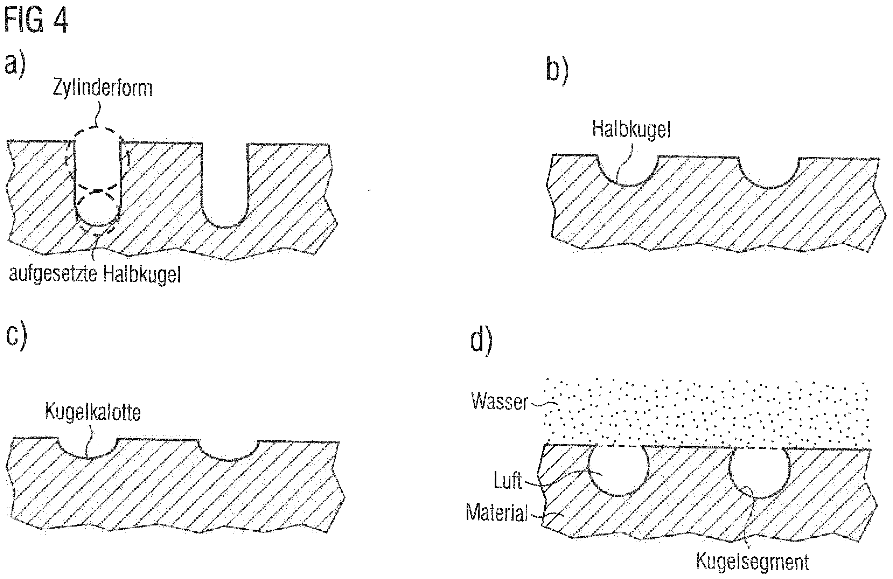

Folgendes sind vorteilhafte Ausgestaltungen der Form der Compartments:
- Compartments in Halbkugelform (konkav, nach innen gewölbt), wie in Fig. 4(b) gezeigt;
- Compartments in Form einer nach innen gewölbten Kugelkalotte oder Kugelkappe, wie in Fig. 4(c) gezeigt;
- Compartments in Form eines Zylinders, der unten mit einer Halbkugel (bevorzugt) oder Kugelkalotte abschließt, wie in Fig. 4(a) gezeigt;
- Compartments in Form eines Kugelsegmentes (auch mit mehr als 50 % einer Kugel und damit einer oberen Öffnung, die weniger kleiner ist als die maximale lichte Weite des Hohlraums), wie in Fig. 4(d) gezeigt.

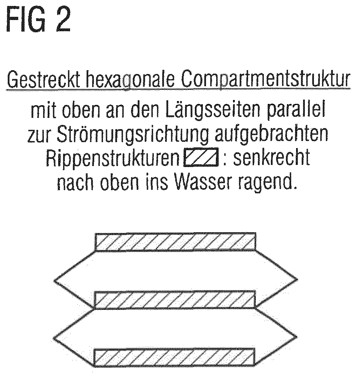

Die Anordnung solcher Compartments zu einer hexagonalen oder zweidimensional hexagonal dichtesten Packung ist bevorzugt, im letzteren Fall mit verbleibenden Stegen kleiner als 20% des Compartment-Durchmessers. Daher weisen die Compartments vorzugsweise eine hexagonale Form und besonders bevorzugt eine gestreckt hexagonale Form auf, wie in Fig. 2 dargestellt. Folgendes sind weitere vorteilhafte Ausgestaltungen der Form der Compartments:
- Compartments in hexagonaler oder gestreckt hexagonaler Form (am Oberen, dem Wasser zugewandten Ende), deren Innenform so ausgestaltet ist, dass die Ecken auf der Unterseite des Compartments vermieden und durch Rundungen ersetzt werden. Bei schmelzbaren Materialien, etwa bei thermoplastischen Polymeren, lässt sich das technisch leicht durch leichtes Anschmelzen der Unterseite erreichen.
- Compartments in hexagonaler oder gestreckt hexagonaler Form (am Oberen, dem Wasser zugewandten Ende), deren Innenform so ausgestaltet ist, dass die Ecken auf der Unterseite des Compartments vermieden und die Form so optimiert wird, dass die Compartments (i) auf der oberen Seite hexagonale oder gestreckt hexagonale Form haben und offen sind, (ii) auf der Unterseite geschlossen sind und (iii) die Form so gewählt wird dass der minimal auftretende Krümmungsradius das unter diesen Randbedingungen mögliche Maximum erreicht oder diesem nahekommt (bevorzugt bis auf 10%).

Das in der gashaltenden Schicht gehaltene Gas kann beispielsweise Luft, Stickstoff, Argon, Helium, Kohlendioxid oder ein anderes Gas sein, wobei Luft, Stickstoff, Argon und Helium bevorzugt sind. Besonders bevorzugt handelt es sich bei dem Gas um Luft oder ein Luftgemisch mit Stickstoff, Argon und/oder Helium.

Aufgrund dieser gashaltenden Schicht der erfindungsgemäßen Oberfläche, bei welcher unter Flüssigkeit zumindest zeitweise eine Gasschicht gehalten wird, können neben der Reibungsreduktion auch die anderen drei vorstehend beschriebenen Problem gelöst werden, nämlich Wirkung gegen Fouling, also gegen biologischen Bewuchs auf der Oberfläche, der Wirkung gegen Korrosion und der Verhinderung der Freisetzung von Giften aus dem Schiffslack (wenn das Wasser die Schiffsoberfläche nicht mehr berührt, kann auch kein wasserlösliches Gift von der Schiffsoberfläche ins Wasser gelangen).

Zu einer Verminderung der Bildung von Turbulenzen trägt diese gehaltene Gasschicht allerdings nicht oder nur indirekt über die Verringerung der Wechselwirkungskräfte beispielsweise zwischen Schiff und Wasser bei. Wären diese null, würde dies auch Turbulenzen vermeiden. Eine direkte Maßnahme zur Verringerung von Turbulenzen ist die reine Verwendung einer unter Wasser gehaltenen Luftschichten jedoch nicht.

Gemäß der vorliegenden Erfindung weist die strukturierte Oberfläche daher zusätzlich parallel zur Strömungsrichtung der Flüssigkeit bzw. parallel zur Bewegungsrichtung der strukturierten Oberfläche relativ zur Flüssigkeit hervorstehende Rippenstrukturen zur Unterdrückung oder Reduzierung von Turbulenzen auf, die zumindest zeitweise um 0,1 µm bis 10 mm aus der Gasschicht herausragen und in die Flüssigkeit hineinragen. Diese zusätzlichen, hervorstehenden Rippenstrukturen sind vorzugsweise derart ausgestaltet, dass sie auf der Mikrometerskala, d.h. von 0,1 µm bis 100 µm, oder auf der Millimeterskala, d.h. von 0,1 mm bis 10 mm, aus der Gasschicht herausragen. Besonders bevorzugt ragen diese Rippenstrukturen mindestens 1 µm, mehr bevorzugt mindestens 5 µm und besonders bevorzugt mindestens 10 µm heraus.

Dadurch lässt sich zusätzlich eine Unterdrückung oder Reduzierung von Turbulenzen erreichen, was den reibungsreduzierenden Effekt der Oberfläche noch weiter erhöht, ohne den Antifouling-Effekt und die antikorrosive Wirkung der Gasschicht, wie dies im Stand der Technik der Fall ist, zu verlieren.

Die Form dieser Rippenstrukturen kann unterschiedlich ausgestaltet sein und beispielsweise den Querschnitt eines Rechteckes, eines Dreieckes oder eines Trapezes haben. In jedem Fall ist es vorteilhaft, wenn die Strukturen möglichst große Ausdehnung in Längsrichtung haben und nach oben spitz zulaufen mit einem Krümmungsradius der Kante im Bereich von 0,1 µm bis 10 µm, besonders bevorzugt zwischen 1 µm und 8 µm.

Gemäß einer bevorzugten Ausführungsform der vorliegenden Erfindung, ist die strukturierte Oberfläche mit einer Vorrichtung kombiniert, die unter Flüssigkeit Gasblasen erzeugt, die nahe an der unter Flüssigkeit gehaltenen Gasschicht der strukturierten Oberfläche erzeugt werden oder die bei ihrem Aufstieg aus der Flüssigkeit dieser Gasschicht nahekommen oder teilweise mit dieser in Kontakt kommen.

Diese Vorrichtung zur Erzeugung der Gasblasen ist nicht besonders beschränkt und kann in Form von im Stand der Technik bekannten Vorrichtungen ausgestaltet sein. Vorzugsweise ist diese Vorrichtung der Gestalt, dass die erzeugten Gasblasen einen Durchmesser von 10 µm bis 10 mm, besonders bevorzugt von 10 µm bis 1 mm, insbesondere von 10 µm bis 100 µm, haben.

Die Kombination mit der "Air Microbubble Technology", also durch die Erzeugung von feinen Gas- bzw. Luftbläschen beispielsweise unter einem Schiff oder in unmittelbarer Nähe der Schiffswände, kann die Reibungsreduzierung durch die Gas- bzw. Luftschicht mit der zusätzlichen Reibungsreduzierung durch das mit Gas- bzw-Luftbläschen verdünnte Wasser in unmittelbarer Nähe zu der mit dem Wasser reibenden Oberfläche erzielen.

Das Material, aus welchem die strukturierte Oberfläche besteht, kann je nach Anwendung der erfindungsgemäßen Oberfläche ausgewählt werden. Vorzugsweise wird jedoch ein Polymermaterial verwendet, mit welchem die strukturierte Oberfläche gefertigt wird.

Gemäß einer bevorzugten Ausführungsform der vorliegenden Erfindung enthält das Material der strukturierten Oberfläche mindestens eines aus der Liste, bestehend aus Silikonen, Silikon-basierten Polymeren und Polymeren auf Acryl-Basis. Die zusätzlichen hervorstehenden Rippenstrukturen können dabei aus demselben Material wie die gashaltende Schicht der strukturierten Oberfläche selbst gefertigt sein.

Vorzugsweise bestehen die hervorstehenden Rippenstrukturen jedoch aus einem anderen Material wie die strukturierte Oberfläche selbst. Insbesondere eignen sich keramischen Materialien, Oxide, Metalle oder auch Stahl.

Gemäß einer weiteren bevorzugten Ausführungsform der vorliegenden Erfindung sind die Rippenstrukturen nicht starr mit der darunterliegenden strukturierten Oberfläche verbunden. Stattdessen sind diese vorzugsweise flexibel und beweglich ausgestaltet. Zumindest können die hervorstehenden Rippenstrukturen elastisch mit der darunterliegenden strukturierten Oberfläche verbunden sein.

Wie vorstehend beschrieben, ist die strukturierte Oberfläche vorzugsweise mit einer Vorrichtung kombiniert, die unter Flüssigkeit Gasblasen erzeugt. Erfindungsgemäß ist die strukturierte Oberfläche in der Lage, das Gas aus den vorbeiziehenden Gasblasen einzufangen und auf diese Weise sich mit Gas aufzuladen oder verlorengegangenes Gas nachzuladen.

Bei dieser Ausgestaltung kann die strukturierte Oberfläche zusätzliche aus der Gasschicht hervorstehende zweite Strukturen aufweisen, die in die Flüssigkeit hineinragen. Durch diese zusätzlichen zweiten Strukturen kann das Gas aus den vorbeiziehenden Gasblasen eingefangen werden, um auf diese Weise die Gasschicht mit Gas aufzuladen oder verlorengegangenes Gas nachzuladen.

Vorzugsweise werden hierbei Strukturen in Form von Haaren, von nach oben dünner werdenden Haaren, von Säulen oder von Stegen verwendet. Das heißt, die hervorstehenden zweiten Strukturen zum Zwecke des Lufteinfangs aus den Gasblasen sind zusätzlich zu den eigentlich hervorstehenden Strukturen zur Unterdrückung oder Reduzierung von Turbulenzen, welche parallel zur Strömungsrichtung der Flüssigkeit bzw. parallel zur Bewegungsrichtung der strukturierten Oberfläche relativ zur Flüssigkeit angeordnet sind, vorhanden.

Gemäß einer weiteren bevorzugten Ausführungsform der vorliegenden Erfindung ist die strukturierte Oberfläche dadurch gekennzeichnet, dass die aus der Gasschicht hervorstehenden zweiten Strukturen elastisch sind und ohne äußere Kräfte aufgerichtet stehen und die zusätzlich zumindest im in die Flüssigkeit hineinragenden Teil ganz oder teilweise von der Benetzbarkeit ihrer Oberfläche so beschaffen sind, dass sie flüssigkeitsabweisende Eigenschaften haben, wobei die elastischen Eigenschaften so eingestellt sind, dass sich die Strukturen bei teilweisem oder vollständigem Verlust der Gasschicht selbständig aufrichten und in die Flüssigkeit ragen, wo sie aufgrund ihrer flüssigkeitsabweisenden Schichten Gasblasen einfangen können, die die Gasschicht nachladen, und dass sie, sobald sich wieder eine Gasschicht gebildet hat, aufgrund ihrer elastischen und ihrer flüssigkeitsabweisenden Eigenschaften wieder in die Gasschicht einklappen. Das heißt, die aus der Gasschicht hervorstehenden zweiten Strukturen gehen von einem aufgerichteten Zustand ohne Gasschicht in den unter einem flacher geneigten Winkel über, in welchem sie nicht mehr oder nur noch in wesentlich geringerem Umfang als zuvor in die Flüssigkeit hineinragen. Erst bei Gasverlust richten sie sich wieder auf.

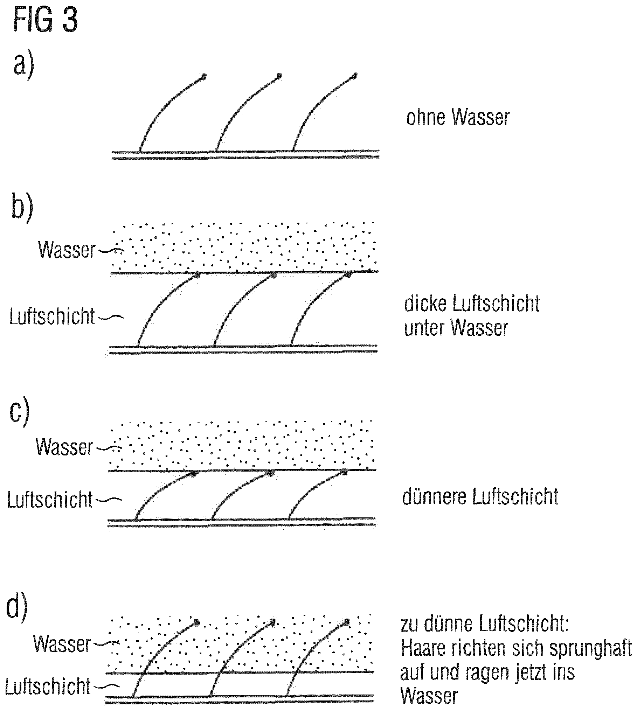

Weiterhin ist es bevorzugt, dass die aus der Gasschicht hervorstehenden zweiten Strukturen zur Strömungsrichtung der Flüssigkeit bzw. zur Bewegungsrichtung der strukturierten Oberfläche relativ zur Flüssigkeit derart ausgerichtet sind, dass sie relativ zur Strömungsrichtung schräg nach hinten zeigen und/oder in dieser Richtung nach innen gekrümmt sind (siehe Fig. 3).

In der vorstehend beschriebenen Kombination mit der "Air Microbubble Technology" bestehen unterschiedliche Möglichkeiten der Ausgestaltung der lufthaltenden Schichten. Im einfachsten Fall wird die bestehende unter Wasser lufthaltende Schicht mit einem Erzeuger von Gasblasen (beispielsweise Kompressor plus Ausström-Düse) kombiniert und die idealerweise nach außen geneigte Oberfläche, beispielsweise eines Schiffes das nach oben breiter wird, kommt in direkten Kontakt mit den aufsteigenden Gasbläschen, die sich dann aufgrund der Oberflächenspannung in die Gasschicht integrieren. Dies ist ein Prozess, der freiwillig abläuft und dabei Energie freisetzt. Auch kann eine horizontal oder fast horizontal verlaufende Oberfläche wie beispielsweise (je nach Rumpfform des Schiffes) die Schiffsunterseite direkt mit den unter dem Schiffsrumpf erzeugten Gasbläschen in Berührung kommen. Insbesondere in letzterem Fall besteht keine Einschränkung, was die Größe der Gasblasen anbelangt. Die Gas-Blase löst sich in der Luftschicht auf, sobald sie mit dieser in direkten Kontakt kommt.

Steigen die Luftbläschen an einer senkrechten oder nahezu senkrechten Wand auf, ist die Situation schwieriger. Die Gasbläschen können parallel zur Wand aufsteigen, ohne mit der lufthaltenden Schicht auf der Wandoberfläche in Kontakt zu kommen. Somit erfolgt auch keine Integration des Gases aus den Gasblasen in die Luftschicht und ein bei Luftverlust erwünschtes Nachladen findet nicht statt. Hier helfen Haare, Netze, scheiben- oder rillenförmige Strukturen oder andere Strukturen, bevorzugt mit hydrophober Beschichtung, die aus der Oberfläche heraus und in das Wasser hineinragen und die die aufsteigenden Luftbläschen aufhalten und bei geeigneter Formgebung (bevorzugt schräg nach oben auf die Schiffswand zuführend und damit direkt die Luft der eingefangenen Bläschen in die Luftschicht kanalisierend) die Luftbläschen einfangen und der Luftschicht zuführen.

In einer vorteilhaften Ausgestaltung erfolgt der Einfang durch hydrophobe, elastische, an Luft (ohne jegliches Wasser) aufgerichtete Strukturen (Haare, Netze, Rippen), die in die unter Wasser lufthaltende Schicht integriert sind und die aufgrund ihrer Länge und ihres Stellwinkels relativ zur Oberfläche, der flacher als 90°, also flacher als ein rechter Winkel sein soll, aus der strukturierten lufthaltenden Schicht zunächst herausragen, wie dies schematisch in Fig. 3(a) dargestellt ist. Bringt man nun diese Schicht unter Wasser, werden diese Haare, da sie hydrophob sind, den Kontakt mit dem Wasser zu vermeiden suchen und da sie elastisch sind, umklappen und sich unter flacherem Winkel in die Luftschicht integrieren, wie dies in Fig. 3(b) dargestellt ist. Wird die Luftschicht unter Wasser nun bei Luftverlust immer dünner, müssen sich die Haare immer weiter neigen, um noch in der Luftschicht zu bleiben (siehe Fig. 3(c)). Mit zunehmender Verbiegung der Haare werden nach dem Hooke'sehen Gesetz immer höhere Rückstellkräfte wirksam, die das Haar wiederaufrichten wollen und unterhalb einer bestimmten Luftschichtdicke, d.h. oberhalb einer bestimmten Verbiegung des Haares, übertreffen diese Rückstellkräfte die Kapillarkräfte, die das hydrophobe Haar in der Luftschicht halten. Das Haar richtet sich auf, ragt ins Wasser und kann nun Luftbläschen einsammeln, die die Schicht neu aufladen, wie dies schematisch in Fig. 3(d) dargestellt ist.

Der Vorteil hierbei ist, dass wenn die Luftschicht geladen und ausreichend dick ist, diese Luft einfangenden Strukturen nicht ins Wasser ragen und tragen damit nicht zu einer Erhöhung des Strömungswiederstandes bei. Erst bei Luftverlust, wenn die Luftschicht zu dünn wird, klappen die Haare aus und fangen Luftbläschen ein. Über die elastischen Eigenschaften der Strukturen (bei den Haaren direkt einstellbar über Formgebung und Dicke) lässt sich die Dicke der Luftschicht einstellen, ab der die Haare ausklappen.

Der große zusätzliche Vorteil der Kombination ist, dass alle vier Effekte, d.h. (i) der Effekt der Gas- bzw. Luftschicht unter Wasser, (ii) der Effekt gerichteter Strukturen zur Vermeidung oder Unterdrückung von Turbulenzen in der Nähe der Schiffsoberfläche oder einer anderen Oberfläche und (iii) der Effekt der Verminderung der Reibung durch die Einbringung von Gas- bzw. Luftbläschen sowie (iv) die permanente oder intermittierende Erzeugung von Gas- bzw. Luftbläschen in Kombination mit strukturierten, gashaltenden Oberflächen, deren Strukturen so gestaltet sind, dass sie bei Gasverlust das Einfangen von Gasbläschen aus dem Wasser erlauben, erzielt werden können. So können bei erfindungsgemäßer Ausgestaltung der gashaltenden Oberflächen bei Gas- bzw. Luftverlust durch die Schicht wieder Gas- bzw. Luftbläschen einfangen kann, die die Gas- bzw. Luftschicht wieder regenerieren. Selbst wenn die Gas- bzw. Luftschicht in einem extremen Fall unter widrigen Umständen beispielsweise bereits nach einer Stunde Gas bzw. Luft verliert, so müssten theoretisch Kompressoren zur Erzeugung der Gas- bzw. Luftbläschen nur jede Stunde für ca. eine Minute laufen, um mittels Einfangens der Gas- bzw. Luftbläschen in die strukturierte, gashaltende Oberfläche diese wieder neu mit Gas bzw. Luft aufzuladen. Der Energieaufwand für die Kompressoren wäre also um einen Faktor 60 niedriger und ihre Lebensdauer und die Serviceintervalle entsprechend länger. Zusätzlich bestünde natürlich weiter die Möglichkeit, die Kompressoren zur Erzeugung der Luftbläschen permanent laufen zu lassen, um beide Effekte der Reibungsreduktion gleichzeitig zu nutzen.

Alle vier Effekte, (i) der Effekt der Gas- bzw. Luftschicht unter Wasser, (ii) der Effekt gerichteter Strukturen zur Vermeidung oder Unterdrückung von Turbulenzen in der Nähe der Schiffsoberfläche oder einer anderen Oberfläche und (iii) der Effekt der Verminderung der Reibung durch die Einbringung von Gas- bzw. Luftbläschen sowie (iv) die permanente oder intermittierende Erzeugung von Gas- bzw. Luftbläschen in Kombination mit strukturierten, gashaltenden Oberflächen, deren Strukturen so gestaltet sind, dass sie bei Gas- bzw. Luftverlust das Einfangen von Gas- bzw. Luftbläschen aus dem Wasser erlauben, lassen sich dabei in beliebiger Weise kombinieren.

Die erfindungsgemäße strukturierte Oberfläche kann in vielen unterschiedliche Anwendungsgebieten angewendet werden, in denen es jeweils darum geht, den direkten Kontakt der Flüssigkeit zu einer Oberfläche durch eine separierende Gas- bzw. Luftschicht zu vermeiden. Beispielsweise findet die erfindungsgemäße strukturierte Oberfläche insbesondere Anwendung in den nachfolgenden Gebieten:
- Luftbeschichtung von Meeresschiffen zur Verringerung der Reibung, zur Vermeidung von Biofouling und zur Vermeidung von Korrosion durch Luftbeschichtung;
- Binnenschifffahrt;
- Meeres-Messtechnik;
- Offshoreplattformen, Bohrinseln, Unterwasserbauwerke;
- Offshore-Windparks;
- Wasserleitungen und allgemeinen Leitungen zum Transport von Flüssigkeiten;
- Fernwärme-Systeme;
- Hygienische Lebensmittelspeicher ohne Biofilmbildung an den Wänden, z.B. für Lagerung und Transport von flüssigen Lebensmitteln, etwa von Säften;
- Hygienische Trinkwasserspeicher ohne Entwicklung von Biofilmen;
- Chemische Anlagentechnik und Reaktoren;

In einem weiteren Aspekt betrifft die vorliegende Erfindung eine Vorrichtung, umfassend mindestens eine der erfindungsgemäßen Oberflächen, wobei diese zwischen zwei Platten angeordnet ist und dadurch zwischen den Platten eine Wasserschicht und eine Luftschicht ausbildet. Dies kann auch in Form eines Stapels erfolgen, in welchem mindestens zwei strukturierten Oberflächen übereinander angeordnet sind, in welchem sich Gas- und Flüssigkeitsschichten abwechseln. Dies ist besonders dann von Vorteil, wenn große Flüssigkeitsoberflächen erwünscht sind, um beispielsweise große Mengen an Flüssigkeit pro Zeit zu verdunsten.

Drei Anwendungen seien hier genannt:
(i) Die Gewinnung von Trinkwasser durch Destillation, d.h. Verdunstung von Wasser und dessen anschließende Kondensation, insbesondere in sonnenreichen Regionen (z.B. in Wüste), wo die Sonne praktisch unbegrenzt und kostenlos zur Verfügung steht. Das technische Problem besteht in der kompakten Schaffung von sehr großen Wasseroberflächen, bei denen - insbesondere bei direkter Sonneneinstrahlung und dadurch erfolgender Erwärmung (insbesondere, wenn man das Objekt, etwas durch matte schwarze Farbgebung Licht- und Infrarotstrahlung absorbierend gestaltet) - große Mengen Wasser pro Zeit verdunsten können, die anschließend wieder kondensiert werden können zur Verwendung als entsalztes Wasser, etwa im Trinkwasserbereich.
(ii) Die Kühlung von Objekten durch Verdunstungskühlung. Einziger Zweck der Kühltürme von Kraftwerken ist die Kühlung, vor allem durch Verdunstung von Wasser. Dies ist eine äußerst effektive Kühlmethode, da Wasser aufgrund seiner Wasserstoffbrückenbindungen zwischen den einzelnen Molekülen eine sehr hohe Verdampfungswärme (benötigte Wärmeenergie pro Kilogramm Wasser) besitzt. Die Kühltürme von Kraftwerken sind nur deshalb so groß, weil man große Oberflächen schaffen muss, damit pro Zeit genügend viel Wasser verdunstet, um die benötigte Kühlleistung zu erzielen. Das zu lösende Problem, um Kühlaggregate, die nach dem Verdunstungsprinzip arbeiten (und dies sind nicht nur die Kühltürme von Kraftwerken) kompakter zu gestalten, besteht darin, möglichst viel Wasseroberfläche auf kompaktem Raum zu schaffen.
(iii) Auch bei der Destillation von Flüssigkeitsgemischen, beispielsweise in der chemischen Industrie oder bei der Anreicherung von Alkohol in Wasser-Alkohol-Gemischen reichert sich in der verdunsteten und wieder kondensierten Phase die leichter flüchtige Flüssigkeit an. Für kostengünstige, hocheffiziente technische Destillationsverfahren benötigt man nicht Erlenmeyerkolben und Bunsenbrenner, sondern Systeme mit sehr großen Flüssigkeit-Gas-Grenzflächen in kompaktem Volumen.

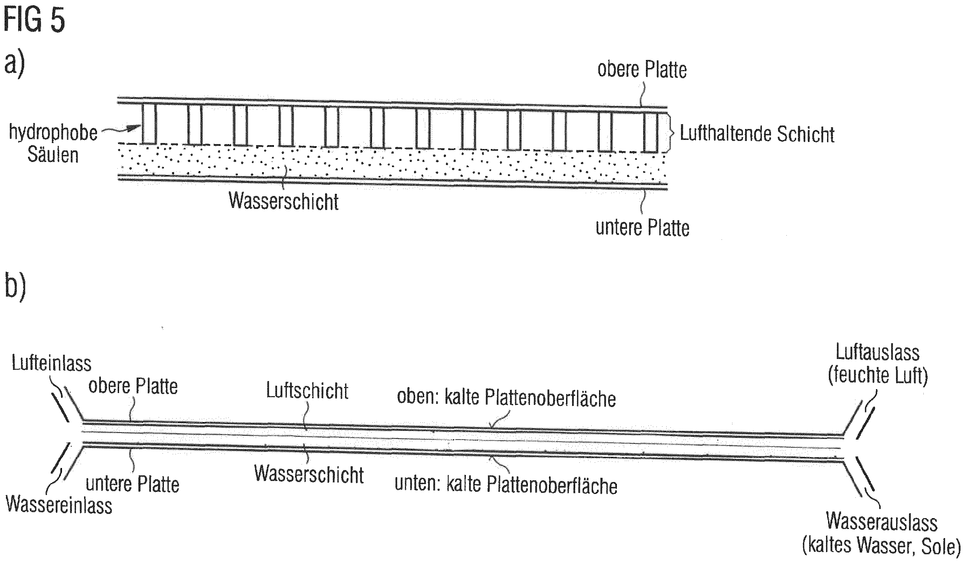

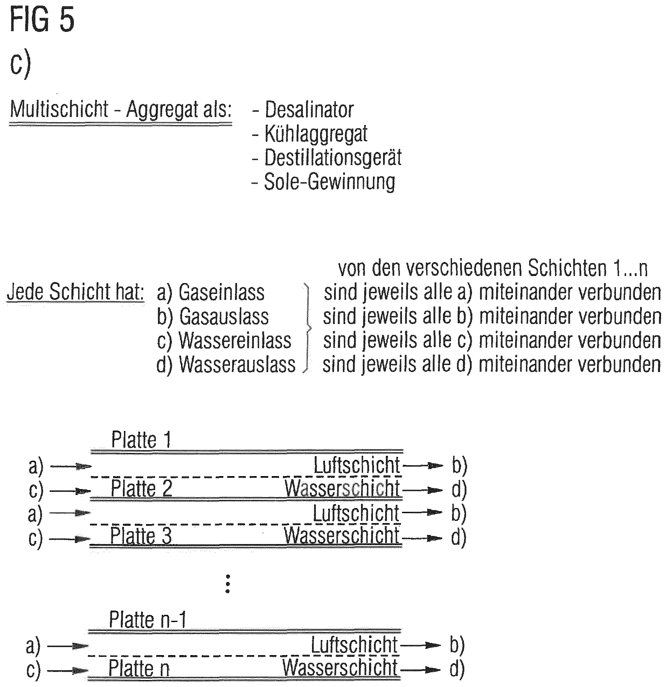

Diese technischen Probleme werden mit der vorliegenden Erfindung dadurch gelöst, dass unter Flüssigkeit gashaltende Oberflächen verwendet werden. Bevorzugt sind hier allerdings zwischen den einzelnen Compartments gasdurchlässige Verbindungen hergestellt. Die Flüssigkeit selbst bildet ebenfalls eine Schicht, wie dies in den Figuren 5(a) bis 5(c) schematisch gezeigt wird. In einer Ausführungsvariante verwendet man etwa eine Glas- oder Metall- oder Kunststoffplatte als obere Abdeckung, auf die die unter Wasser lufthaltende Struktur aufgebracht ist, beispielsweise mit einer Luftschicht der Dicke zwischen 0,1 mm und 5 mm, gegeben durch die Höhe der hydrophoben oder superhydrophoben Säulenstrukturen mit oder ohne hydrophilem Ende, die sich auf der Unterseite der Platte befindet. Parallel zu dieser Platte wird eine weitere, idealerweise gleich große Platte aus dem gleichen oder einem anderen Material gebracht, wobei der Abstand der Platten größer ist als die Dicke der lufthaltenden Schicht, beispielsweise um 0,1 mm bis 30 mm größer, bevorzugt um 1 mm bis 15 mm größer. Liegen nun die Platten horizontal und befüllt man nun den Zwischenraum zwischen den Platten ohne oder mit nur geringen Über- oder Unterdruck (typisch bis 30 mbar über oder unter dem umgebenden Luftdruck) mit Wasser, so füllt das Wasser den Zwischenraum zwischen den Platten nicht vollständig: es verbleibt die lufthaltende Schicht auf der Oberseite. Nun kann man langsam Wasser nachfließen lassen und das mit Salzen angereicherte Wasser (die Sole) auf der anderen Seite abziehen. Gleichzeitig pumpt man Luft durch die luftführende Schicht über dem Wasser. Lässt man trockene Luft einströmen, so findet man durch die Verdunstung des Wassers Luft höherer Luftfeuchtigkeit (im Vergleich zu der einströmenden Luft), die ausströmt. Zugleich kühlt sich das Aggregat aus den beiden Platten und der dazwischenliegenden Wasserschicht und Gasschicht durch die Verdunstungskälte ab.

Man hat also drei Effekte:
(i) Die durchströmende Luft wird mit den Molekülen der verdunstenden Flüssigkeit angereichert und im Grenzfall langsamer Durchströmung mit diesen gesättigt. Bei Abkühlung kondensiert die Flüssigkeit wieder aus, was sich sowohl für die Destillation, etwa in der chemischen Industrie und in der chemischen Prozesstechnik allgemein anwenden lässt, aber auch in der Trinkwassergewinnung durch Entsalzung von Meerwasser.
(ii) Im Wasser wird die nicht verdunstbare Komponente, also die Mineralien und Salze, angereichert. Die aus der Zelle wieder austretende Flüssigkeit kann als salzreiche Sole zur Gewinnung von diesen verwendet werden. Eine Anwendung sind die im Bereich der Geothermie gewonnenen Wassermengen, etwa aus größeren Tiefen, aus denen so nicht nur Erdwärme, sondern auch Mineralien und wertvolle gelöste Substanzen gewonnen werden können.
(iii) Die Apparatur kühlt sich ab, was die Anwendung als weitgehend passives, umweltfreundliches Kühlaggregat, nicht nur im Kraftwerksbereich, erlaubt.

Die Apparatur kühlt sich ab, was die Anwendung als weitgehend passives, umweltfreundliches Kühlaggregat auch im Wohnbereich erlaubt, wo man statt der energiekonsumierenden Kühlaggregate auf passive Kühlaggregate durch Verdunstungskälte übergehen kann, weshalb die erfindungsgemäße Vorrichtung erstmals eine kompakte Ausgestaltung erlaubt. Natürlich bringt im Sommer auch das Aufhängen vieler nasser Handtücher eine umweltfreundliche Kühlung, allerdings mit folgenden Nachteilen:
- Die Tücher müssen immer wieder von Neuem nass gemacht werden.
- Das ständig neu verdunstende Wasser führt zu einer Bildung von Kalk- und Salzkrusten, bis die Tücher unverwendbar sind.
- Das verdunstende Wasser führt zu einer Erhöhung der Luftfeuchtigkeit im Wohnraum bis hin zu einer ungesunden und unerträglichen Schwüle bei 100% Luftfeuchtigkeit. Schwitzen bringt den Menschen keine Abkühlung mehr und die Gefahr eines Kreislaufversagens besteht.
- Spätestens wenn im Raum 100% Luftfeuchtigkeit erreicht sind, verdunstet kein Wasser mehr und der kühlende Effekt der nassen Tücher hat ein Ende.
- Man muss also ständig den Raum lüften - was zur Wohn- und Büroraumkühlung oder für zu kühlende Lebensmittelräume, Lagerräume und Computerräume tagsüber im Sommer kontraproduktiv ist, da dann die Wärme von außen bei hohen Außentemperaturen hereinkommt.
- Hinzukommt, dass die durch die Verdunstung erzeugte Feuchte Schäden an Gebäuden und Schäden am Inventar (Bücher, Elektronik, Computer etc.) hervorrufen kann.

Alle diese Probleme werden mit der erfindungsgemäßen Vorrichtung gelöst:
- Es wird kontinuierlich langsam neues Wasser zugeführt, um Verdunstungsverluste und die Abführung der Sole am Abfluss der Vorrichtung auszugleichen.
- Es wird kontinuierlich Wasser abgeführt, um das mit Salzen und Mineralien durch die laufende Verdunstung angereicherte Wasser abzuführen, bevor Salze ausfallen.
- In einer bevorzugten Ausführung wird die Salzkonzentration - etwa durch elektrische Leitfähigkeitsmessungen oder durch Zyklovoltammetrie und deren automatisierte oder manuelle Auswertung - kontinuierlich überwacht und auf diese Weise die Wasserzufuhr und Abfuhr automatisch geregelt, so dass es nicht zur Ausfällung von Salzen in der Anlage kommt, und dass das am Ausfluss abfließende Wasser (die Sole) die gewünschte Salzkonzentration hat, was insbesondere im Falle der Gewinnung von Rohstoffen (Salzen, Mineralien) aus der Sole oder im Falle der direkten Anwendung der Sole, etwa in der Medizin für therapeutische Anwendungen) sehr vorteilhaft ist.
- Es entsteht keine erhöhte Luftfeuchtigkeit im Raum. Schäden an Gebäuden und Inventar werden ebenso vermieden wie Komforteinbußen und gesundheitliche Risiken bei Menschen durch die hohe Luftfeuchtigkeit.
- Die Sole ist nicht verloren, sondern lässt sich, sofern gewünscht, nutzen.

In einer vorteilhaften Ausgestaltung der Vorrichtung werden nicht nur zwei parallele, bevorzugt horizontal liegende Platten verwendet, zwischen denen sich (bevorzugt unten) eine wasserführende Schicht und (bevorzugt oben) eine luftführende Schicht befindet, sondern man verwendet mehrere solcher übereinandergeschichtete Platten. Der Plattenstapel kann dabei beliebig dick sein. Man benötigt dann pro Schicht auch nicht mehr zwei Platten. Es genügt pro Schicht eine Platte, die auf der Unterseite eine unter Wasser Luft haltende strukturierte Schicht enthält und auf der Oberseite nicht. Ist der Abstand benachbarter Schichten im Stapel beispielsweise 1 cm, so kann man in einem Volumen von 1 Kubikmeter 100 Quadratmeter Wasseroberfläche erzeugen. Hier stellt sich die Frage des Abtransportes der Wärmeenergie. Dies kann dann nicht mehr ausreichend durch die Kühlung der Oberfläche geschehen. Es erfolgt in diesem Falle durch die Zirkulation des Wassers. Das kalte Wasser am Auslauf wird durch einen Wärmetauscher geleitet, der die Raumkühlung bewirkt und geht dann wieder in die Verdunstungsanlage durch deren Einlauf zurück. Dieser Kreislauf ist allerdings auch hier nicht ständig geschlossen, sondern es wird kontinuierlich oder in Intervallen das salzreiche Wasser entnommen und frisches, salzärmeres Wasser zugeführt, um eine Verkalkung und Versalzung der Anlage durch Ausfällungen zu vermeiden. Die mit Feuchtigkeit angereicherte Luft wird ins Freie entlassen und nicht in den zu kühlenden Raum. Will man im zu kühlenden Raum zusätzlich die Luftfeuchte regeln so kann natürlich (idealerweise geregelt) ein (kleiner) Teil der feuchten Luft im Rahmen einer künstlichen Luftbefeuchtung auch in den Raum eingespeist werden.

Eine sehr einfache Variante der oben genannten Vorrichtung, die sich zwar durch eine kostengünstige Herstellung, allerdings durch sehr geringe Stabilität insbesondere bei Wasserdruckschwankungen und Luftdruckschwankungen, auszeichnet, ist die Verwendung von unstrukturierten oder beliebig strukturierten Platten mit beliebiger Oberfläche. Auch bei Platten, die keine strukturierte, unter Wasser lufthaltende Oberfläche besitzen, ist eine hydrophile Unterseite (dort, wo die Wasserschicht aufliegt) und eine hydrophobe oder superhydrophobe Oberseite (dort, wo der Kontakt mit der Luftschicht erfolgt) eine vorteilhafte Ausgestaltung der Vorrichtung.

Darüber hinaus betrifft die vorliegende Erfindung auch die Verwendung der erfindungsgemäßen strukturierten Oberfläche auf Schiffsoberflächen, in Anlagen zur Entsalzung von Wasser (Desalination) oder in Anlagen zur Salzanreicherung in der Salzgewinnung sowie in Kühlanlagen als kompakte, hochleistungsfähige Kühlaggregate.

Aus Schiffsoberflächen kann die erfindungsgemäße strukturierte Oberfläche insbesondere (i) zur Reduzierung der Reibungskräfte zwischen Schiff und Wasser, (ii) zur Vermeidung von Biofilmbewuchs und Fouling und (iii) zur Vermeidung von Korrosion sowie (iv) zur Vermeidung der Freisetzung von toxischen oder umweltschädlichen Stoffen aus der Schiffsbeschichtung in das umgebende Wasser beitragen.

In Anlagen zur Entsalzung von Wasser kann die erfindungsgemäße strukturierte Oberfläche bzw. Vorrichtung insbesondere zur Brauchwasser- und Trinkwassergewinnung verwendet werden.

In Anlagen zur Salzanreicherung in der Salzgewinnung kann die erfindungsgemäße strukturierte Oberfläche insbesondere unter Verwendung von Vielfachschichtsystemen aus Gas und darunterliegender Flüssigkeit verwendet werden, wobei die Flüssigkeit in die Gasschicht verdunstet und aus dieser als mit den Molekülen der Flüssigkeit angereichertes oder gesättigtes Gas ("Dampf") abgeführt wird. Selbes gilt bei der Verwendung in Entsalzungsanlagen.

Wie vorstehend beschrieben kann die erfindungsgemäße strukturierte Oberfläche ebenfalls in Kühlanlagen als kompakte, hochleistungsfähige Kühlaggregate zur Verdunstung von Wasser oder einer anderen Flüssigkeit unter Nutzung der Verdunstungskälte verwendet werden. Vorzugsweise kann dies in Kraftwerken sein.

Wie auch bei der Salzanreicherung kann hier unter Verwendung von Vielfachschichtsystemen aus Gas und darunterliegender Flüssigkeit ein großer Vorteil gezogen werden, wobei die Flüssigkeit in die Gasschicht verdunstet und aus dieser als mit den Molekülen der Flüssigkeit angereichertes oder gesättigtes Gas ("Dampf") abgeführt wird.

Korrosion sowie (iv) zur Vermeidung der Freisetzung von toxischen oder umweltschädlichen Stoffen aus der Schiffsbeschichtung in das umgebende Wasser beitragen.

In Anlagen zur Entsalzung von Wasser kann die erfindungsgemäße strukturierte Oberfläche bzw. Vorrichtung insbesondere zur Brauchwasser- und Trinkwassergewinnung verwendet werden.

In Anlagen zur Salzanreicherung in der Salzgewinnung kann die erfindungsgemäße strukturierte Oberfläche insbesondere unter Verwendung von Vielfachschichtsystemen aus Gas und darunterliegender Flüssigkeit verwendet werden, wobei die Flüssigkeit in die Gasschicht verdunstet und aus dieser als mit den Molekülen der Flüssigkeit angereichertes oder gesättigtes Gas ("Dampf") abgeführt wird. Selbes gilt bei der Verwendung in Entsalzungsanlagen.

Wie vorstehend beschrieben kann die erfindungsgemäße strukturierte Oberfläche ebenfalls in Kühlanlagen als kompakte, hochleistungsfähige Kühlaggregate zur Verdunstung von Wasser oder einer anderen Flüssigkeit unter Nutzung der Verdunstungskälte verwendet werden. Vorzugsweise kann dies in Kraftwerken sein.

Wie auch bei der Salzanreicherung kann hier unter Verwendung von Vielfachschichtsystemen aus Gas und darunterliegender Flüssigkeit ein große Vorteil gezogen werden, wobei die Flüssigkeit in die Gasschicht verdunstet und aus dieser als mit den Molekülen der Flüssigkeit angereichertes oder gesättigtes Gas ("Dampf") abgeführt wird.

## Patentansprüche

1. Strukturierte Oberfläche, die auf einer flüssigkeitszugewandten Seite zumindest bereichsweise flüssigkeitsabweisende Strukturen aufweist, die eine gashaltende Schicht ausbilden, wobei die flüssigkeitsabweisenden Strukturen Vorsprünge oder vorstehende Elemente sind, wobei die Oberfläche der gashaltenden Schicht zumindest im Bereich der Vorsprünge oder vorstehenden Elemente eine flüssigkeitsabweisende Oberfläche aufweist, sodass die gashaltende Schicht unter Flüssigkeit zumindest zeitweise eine Gasschicht hält oder halten kann, wobei die gashaltende Schicht durch fluidundurchlässige Trennwände in eine Vielzahl von in sich abgeschlossenen Compartments unterteilt ist, **dadurch gekennzeichnet, dass** die strukturierte Oberfläche zusätzlich parallel zur Strömungsrichtung der Flüssigkeit bzw. parallel zur Bewegungsrichtung der strukturierten Oberfläche relativ zur Flüssigkeit hervorstehende Rippenstrukturen aufweist, die auf den oberen, der Flüssigkeit zugewandten Enden auf den Teilen der Compartment-Wände gebildet sind, die parallel zur Strömungsrichtung ausgerichtet sind, so dass diese Compartment-Wände in Bezug auf die anderen Compartment-Wände, die nicht parallel zur Strömungsrichtung ausgerichtet sind, erhöht sind und zumindest zeitweise um 0,1 µm bis 10 mm aus der Gasschicht herausragen und in die Flüssigkeit hineinragen.

2. Strukturierte Oberfläche gemäß Anspruch 1, **dadurch gekennzeichnet, dass** die strukturierte Oberfläche mit einer Vorrichtung kombiniert ist, die unter Flüssigkeit Gasblasen erzeugt, die nahe an der unter Flüssigkeit gehaltenen Gasschicht der strukturierten Oberfläche erzeugt werden oder die bei ihrem Aufstieg aus der Flüssigkeit dieser Gasschicht nahekommen oder teilweise mit dieser in Kontakt kommen.

3. Strukturierte Oberfläche gemäß Anspruch 2, **dadurch gekennzeichnet, dass** die erzeugten Gasblasen einen Durchmesser von 10 µm bis 10 mm haben.

4. Strukturierte Oberfläche gemäß einem der Ansprüche 1 bis 3, **dadurch gekennzeichnet, dass** das Material der strukturierten Oberfläche mindestens eines aus der Liste, bestehend aus Silikonen, Silikon-basierten Polymeren und Polymeren auf Acryl-Basis, enthält.

5. Strukturierte Oberfläche gemäß einem der Ansprüche 1 bis 4, **dadurch gekennzeichnet, dass** die Rippenstrukturen aus einem anderen Material bestehen als die strukturierte Oberfläche selbst, vorzugsweise aus einem keramischen Material oder aus einem Oxid oder aus Metall oder aus Stahl.

6. Strukturierte Oberfläche gemäß einem der Ansprüche 1 bis 5, **dadurch gekennzeichnet, dass** die Rippenstrukturen nicht starr mit der darunterliegenden strukturierten Oberfläche verbunden sind, sondern flexibel und beweglich sind oder zumindest elastisch mit ihr verbunden sind.

7. Strukturierte Oberfläche gemäß einem der Ansprüche 2 bis 6, **dadurch gekennzeichnet, dass** die strukturierte Oberfläche zusätzliche aus der Gasschicht hervorstehende zweite Strukturen aufweist, die in die Flüssigkeit hineinragen, so dass das Gas aus den vorbeiziehenden Gasblasen eingefangen wird, um auf diese Weise die Gasschicht mit Gas aufzuladen oder verlorengegangenes Gas nachzuladen.

8. Strukturierte Oberfläche gemäß Anspruch 7, **dadurch gekennzeichnet, dass** die aus der Gasschicht hervorstehenden zweiten Strukturen die Form von Haaren, von nach oben dünner werdenden Haaren, von Säulen und von Stegen haben.

9. Strukturierte Oberfläche gemäß Anspruch 7 oder 8, **dadurch gekennzeichnet, dass** die aus der Gasschicht hervorstehenden zweiten Strukturen elastisch sind und ohne äußere Kräfte aufgerichtet stehen und die zusätzlich zumindest im in die Flüssigkeit hineinragenden Teil ganz oder teilweise von der Benetzbarkeit ihrer Oberfläche so beschaffen sind, dass sie flüssigkeitsabweisende Eigenschaften haben, wobei die elastischen Eigenschaften so eingestellt sind dass sich die Strukturen bei teilweisem oder vollständigem Verlust der Gasschicht selbständig aufrichten und in die Flüssigkeit ragen, wo sie aufgrund ihrer flüssigkeitsabweisenden Eigenschaften Gasblasen einfangen können, die die Gasschicht nachladen, und dass sie, sobald sich wieder eine Gasschicht gebildet hat, aufgrund ihrer elastischen und ihrer flüssigkeitsabweisenden Eigenschaften wieder in die Gasschicht einklappen.

10. Strukturierte Oberfläche gemäß Anspruch 7, 8 oder 9, **dadurch gekennzeichnet, dass** die aus der Gasschicht hervorstehenden zweiten Strukturen zur Strömungsrichtung der Flüssigkeit bzw. zur Bewegungsrichtung der strukturierten Oberfläche relativ zur Flüssigkeit derart ausgerichtet sind, dass sie relativ zur Strömungsrichtung schräg nach hinten zeigen und/oder in dieser Richtung nach innen gekrümmt sind.

11. Vorrichtung, umfassend mindestens zwei Platten und mindestens eine strukturierte Oberfläche nach einem der Ansprüche 1 bis 10, wobei diese zwischen den zwei Platten angeordnet ist und dadurch zwischen den Platten eine Wasserschicht und eine Luftschicht ausbildet.

12. Verwendung der strukturierten Oberfläche gemäß einem der Ansprüche 1 bis 10 auf Schiffsoberflächen, insbesondere (i) zur Reduzierung der Reibungskräfte zwischen Schiff und Wasser, (ii) zur Vermeidung von Biofilmbewuchs und Fouling und (iii) zur Vermeidung von Korrosion sowie (iv) zur Vermeidung der Freisetzung von toxischen oder umweltschädlichen Stoffen aus der Schiffsbeschichtung in das umgebende Wasser.

13. Verwendung der strukturierten Oberfläche oder der Vorrichtung gemäß einem der Ansprüche 1 bis 11 in Anlagen zur Entsalzung von Wasser, insbesondere zur Brauchwasser- und Trinkwassergewinnung, oder in Anlagen zur Salzanreicherung in der Salzgewinnung, insbesondere unter Verwendung von Vielfachschichten aus Gas und darunterliegender Flüssigkeit, wobei die Flüssigkeit in die Gasschicht verdunstet und aus dieser als mit den Molekülen der Flüssigkeit angereichertes oder gesättigtes Gas ("Dampf") abgeführt wird.

14. Verwendung der strukturierten Oberfläche oder der Vorrichtung gemäß einem der Ansprüche 1 bis 11 in Kühlanlagen als kompakte, hochleistungsfähige Kühlaggregate zur Verdunstung von Wasser oder einer anderen Flüssigkeit unter Nutzung der Verdunstungskälte, vorzugsweise als Kühlaggregate in Kraftwerken, insbesondere unter Verwendung von Vielfachschichten aus Gas und darunterliegender Flüssigkeit, wobei die Flüssigkeit in die Gasschicht verdunstet und aus dieser als mit den Molekülen der Flüssigkeit angereichertes oder gesättigtes Gas ("Dampf") abgeführt wird.

## Claims

1. A structured surface having on a liquid-facing side at least in certain areas liquid-repellent structures that form a gas-holding layer, wherein the liquid-repellent structures are projections or protruding elements, wherein the surface of the gas-holding layer, at least in the area of the projections or protruding elements, has a liquid-repellent surface so that the gas-holding layer under liquid at least temporarily holds or can hold a gas layer, wherein the gas-holding layer is subdivided by fluid-impermeable separating walls into a multiplicity of self-contained compartments, **characterized in that** the structured surface additionally comprises protruding rib structures parallel to the flow direction of the liquid or parallel to the movement direction of the structured surface relative to the liquid, which are formed on the upper, liquid-facing ends of the parts of the compartment walls that are oriented parallel to the flow direction, so that these compartment walls are elevated relative to the other compartment walls that are not oriented parallel to the flow direction and project from the gas layer into the liquid by 0.1 µm to 10 mm at least temporarily.

2. The structured surface according to claim 1, **characterized in that** the structured surface is combined with a device that, under liquid, generates gas bubbles which are generated close to the gas layer, held under liquid, of the structured surface or which, upon rising from the liquid, come close this gas layer or partially come in contact therewith.

3. The structured surface according to claim 2, **characterized in that** the generated gas bubbles have a diameter ranging from 10 µm to 10 mm.

4. The structured surface according to one of claims 1 to 3, **characterized in that** the material of the structured surface contains at least one of the list consisting of silicones, silicone-based polymers, and acrylic-based polymers.

5. The structured surface according to one of claims 1 to 4, **characterized in that** the rib structures consist of a different material than the structured surface itself, preferably of a ceramic material or of an oxide or of metal or of steel.

6. The structured surface according to one of claims 1 to 5, **characterized in that** the rib structures are not rigidly connected to the underlying structured surface, but are flexible and mobile or are at least resiliently connected to it.

7. The structured surface according to one of claims 2 to 6, **characterized in that** the structured surface additionally comprises second structures protruding from the gas layer, which project into the liquid so that the gas from the gas bubbles moving past is trapped in order to supply the gas layer with gas or replenish lost gas.

8. A structured surface according to claim 7, **characterized in that** the second structures protruding from the gas layer have the shape of hairs, hairs becoming thinner upward, columns and webs.

9. A structured surface according to claim 7 or 8, **characterized in that** the second structures protruding from the gas layer are resilient and stand upright in the absence of external forces, and they are additionally configured fully or partially by the wettability of their surface, at least in the part projecting into the liquid, in such a way that they have liquid-repellent properties, the resilient properties are adjusted in such a way that the structures, in the event of partial or full loss of the gas layer, automatically stand upright and project into the liquid, where because of their liquid-repellent layers they can trap gas bubbles which replenish the gas layer, and in such a way that as soon as a gas layer has been formed again, they are folded back into the gas layer because of their resilient properties and their liquid-repellent properties.

10. A structured surface according to claim 7, 8, or 9, **characterized in that** the second structures protruding from the gas layer are oriented relative to the flow direction of the liquid or to the movement direction of the structured surface relative to the liquid, in such a way that they point obliquely rearward relative to the flow direction and/or are curved inward in this direction.

11. A device comprising at least two plates and at least one structured surface according to any of the claims 1 to 10, wherein the structured surface is arranged between the two plates, thereby forming a water layer and an air layer between the plates.

12. Use of the structured surface according to any of the claims 1 to 10 on ship surfaces, particularly (i) to reduce friction forces between ship and water, (ii) to avoid biofilm growth and fouling and (iii) to avoid corrosion, as well as (iv) to avoid release of toxic or environmentally harmful substances from the ship into the surrounding water.

13. Use of the structured surface or the device according to any of the claims 1 to 11 in water desalination plants, particularly to obtain service water and drinking water, or in systems for salt enrichment in salt production, particularly using multiple layers of gas and underlying liquid, the liquid evaporating into the gas layer and being removed therefrom as gas ("vapor") enriched or saturated with the molecules of the liquid.

14. Use of the structured surface or the device according to any of the claims 1 to 11 in cooling systems as compact, high-performance cooling units for the evaporation of water or another liquid while using the enthalpy of vaporization, preferably as cooling units in power plants, particularly using multiple layers of gas and underlying liquid, the liquid evaporating into the gas layer and being removed therefrom as gas ("vapor") enriched or saturated with the molecules of the liquid.

## Revendications

1. Surface structurée qui présente sur un côté tourné vers du liquide des structures répulsives au liquide au moins par régions qui forment une couche contenant du gaz, dans laquelle les structures répulsives au liquide sont des saillies ou éléments saillants, dans laquelle la surface de la couche contenant du gaz présente au moins dans la région des saillies ou éléments saillants une surface répulsive au liquide de sorte que la couche contenant du gaz maintient ou peut maintenir au moins temporairement une couche de gaz sous du liquide, dans laquelle la couche contenant du gaz est divisée par des cloisons imperméables au fluide en une pluralité de compartiments se fermant, **caractérisée en ce que** la surface structurée présente en outre parallèlement à la direction d'écoulement du liquide ou parallèlement à la direction de déplacement de la surface structurée par rapport au liquide des structures de nervure saillantes qui sont formées sur les extrémités supérieures tournées vers le liquide sur les parties des parois de compartiment qui sont orientées parallèlement à la direction d'écoulement de sorte que ces parois de compartiment sont surélevées par rapport aux autres parois de compartiment qui ne sont pas orientées parallèlement à la direction d'écoulement, et dépassent de la couche de gaz au moins temporairement de 0,1 µm à 10 mm et avancent dans le liquide.

2. Surface structurée selon la revendication 1, **caractérisée en ce que** la surface structurée est combinée à un dispositif qui génère des bulles de gaz sous du liquide qui sont générées près de la couche de gaz maintenue sous du liquide de la surface structurée ou qui s'approchent de cette couche de gaz lors de leur montée hors du liquide ou viennent partiellement en contact avec celle-ci.

3. Surface structurée selon la revendication 2, **caractérisée en ce que** les bulles de gaz générées ont un diamètre de 10 µm à 10 mm.

4. Surface structurée selon une des revendications 1 à 3, **caractérisée en ce que** le matériau de la surface structurée contient au moins un élément de la liste constituée de silicones, polymères à base de silicone et polymères à base acrylique.

5. Surface structurée selon une des revendications 1 à 4, **caractérisée en ce que** les structures de nervure sont constituées d'un autre matériau que la surface structurée elle-même, de préférence d'un matériau céramique ou d'un oxyde ou de métal ou d'acier.

6. Surface structurée selon une des revendications 1 à 5, **caractérisée en ce que** les structures de nervure ne sont pas connectées de manière rigide à la surface structurée sous-jacente, mais sont flexibles et mobiles ou sont connectées à elle au moins élastiquement.

7. Surface structurée selon une des revendications 2 à 6, **caractérisée en ce que** la surface structurée présente des secondes structures supplémentaires saillant de la couche de gaz qui avancent dans le liquide de sorte que le gaz provenant des bulles de gaz qui défilent est piégé pour charger en gaz la couche de gaz ou recharger du gaz perdu.

8. Surface structurée selon la revendication 7, **caractérisée en ce que** les secondes structures saillant de la couche de gaz ont la forme de cheveux, de cheveux s'affinant vers le haut, de colonnes et d'arêtes.

9. Surface structurée selon la revendication 7 ou 8, **caractérisée en ce que** les secondes structures saillant de la couche de gaz sont élastiques et restent debout sans forces extérieures, et sont en outre conditionnées au moins dans la partie avançant dans le liquide entièrement ou partiellement par la mouillabilité de leur surface de sorte qu'elles ont des propriétés répulsives au liquide, dans laquelle les propriétés élastiques sont réglées de sorte que les structures se dressent d'elles-mêmes en cas de perte partielle ou complète de la couche de gaz et s'élèvent dans le liquide où elles peuvent piéger des bulles de gaz en raison de leurs propriétés répulsives au liquide, lesquelles rechargent la couche de gaz, et qu'elles se rétractent de nouveau dans la couche de gaz en raison de leurs propriétés élastiques et de leurs propriétés répulsives au liquide dès qu'une couche de gaz s'est reformée.

10. Surface structurée selon la revendication 7, 8 ou 9, **caractérisée en ce que** les secondes structures saillant de la couche de gaz sont orientées par rapport à la direction d'écoulement du liquide ou par rapport à la direction de déplacement de la surface structurée par rapport au liquide de telle sorte qu'elles pointent en biais vers le bas par rapport à la direction d'écoulement et/ou sont courbées vers l'intérieur dans cette direction.

11. Dispositif, comprenant au moins deux plaques et au moins une surface structurée selon une des revendications 1 à 10, dans lequel celle-ci est disposée entre les deux plaques et forme de ce fait une couche d'eau et une couche d'air entre les plaques.

12. Utilisation de la surface structurée selon une des revendications 1 à 10 sur des surfaces de navire, notamment (i) pour réduire les forces de friction entre navire et eau, (ii) pour éviter la salissure par biofilm et la salissure et (iii) pour éviter la corrosion ainsi que (iv) pour éviter la libération de substances toxiques et polluantes du revêtement de navire dans l'eau environnante.

13. Utilisation de la surface structurée ou du dispositif selon une des revendications 1 à 11 dans des installations de dessalage d'eau, notamment pour la production d'eau industrielle et d'eau potable, ou dans des installations pour l'enrichissement en sel dans la production de sel, notamment en utilisant des couches multiples de gaz et de liquide sous-jacent, dans laquelle le liquide est évaporé dans la couche de gaz et évacué de celle-ci en tant que gaz (« vapeur ») enrichi ou saturé avec les molécules du liquide.

14. Utilisation de la surface structurée ou du dispositif selon une des revendications 1 à 11 dans des installations de refroidissement en tant que modules de refroidissement compacts, capables de hautes performances pour l'évaporation d'eau ou d'un autre liquide en utilisant le froid dû à l'évaporation, de préférence en tant que modules de refroidissement dans des centrales, notamment en utilisant des couches multiples de gaz et de liquide sous-jacent, dans laquelle le liquide est évaporé dans la couche de gaz et évacué de celle-ci en tant que gaz (« vapeur ») enrichi ou saturé avec les molécules du liquide.
